# EUROPÄISCHE PATENTANMELDUNG

(11) **EP 1 219 157 A1**
(43) Veröffentlichungstag der Anmeldung: **03.07.2002**
(21) Anmeldenummer: 01129611.8
(22) Anmeldetag: 12.12.2001
(51) Int. Cl.: A01D 41/12

(54) **Mähdrescher und Ernteverfahren**

(30) Priorität: 20.12.2000 DE 10063551
(71) Anmelder: DEERE & COMPANY, Moline, Illinois 61265-8098 (US)
(72) Erfinder: Espanel, Christophe, 70180 Dampierre sur Salon (FR)
(74) Vertreter: Holst, Sönke, Dr.

(57) **Zusammenfassung**

Die Erfindung bezieht sich auf einen Mähdrescher mit einer Gutaufnahmeeinrichtung, einer Dresch- und Trenneinrichtung, die ausgedroschene Erntegutreste ausgibt, und einer Transporteinrichtung, die eingerichtet ist, die von der Dresch- und Trenneinrichtung ausgegebenen, ausgedroschenen Erntegutreste in seitlicher Richtung zu transportieren und in einem Schwad auf einem Feld abzulegen.

Es wird vorgeschlagen, dass die Transporteinrichtung eingerichtet ist, die Erntegutreste im Abstand von der Mittellängsachse des Mähdreschers auf dem Feld abzulegen. Dadurch können die Erntegutreste beim Zurücklegen zweier Wegstrecken auf dem Feld auf demselben Schwad abgelegt werden, so dass mit einer Ballenpresse nur noch die halbe Strecke zurückgelegt werden muss, um die Erntegutreste aufzunehmen.

## Beschreibung

Die Erfindung betrifft einen Mähdrescher mit einer Gutaufnahmeeinrichtung, einer Dresch- und Trenneinrichtung, die ausgedroschene Erntegutreste ausgibt, und einer Transporteinrichtung, die eingerichtet ist, die von der Dresch- und Trenneinrichtung ausgegebenen, ausgedroschenen Erntegutreste in seitlicher Richtung zu transportieren und in einem Schwad auf einem Feld abzulegen.

Bei Mähdreschern sind im Stand der Technik grundsätzlich zwei Möglichkeiten bekannt, gedroschenes Stroh abzulegen. Zum einen kann das Stroh gehäckselt und entsprechend der Breite des vom Mähdrescher aufgenommenen Schwad ausgeworfen und auf dem Feld verteilt werden. Zum anderen kann es an der Rückseite des Mähdreschers in einem mittigen Schwad abgelegt werden. Der Strohschwad kann dann mittels einer Ballenpresse aufgenommen und zu Ballen gepresst werden.

In der DE 36 18 105 A wird ein Mähdrescher beschrieben, bei dem die von einer Siebeinrichtung abgegebene Spreu durch Fördergurte seitlich nach außen abtransportiert und durch Wurfschaufeln auf das Feld ausgeworfen wird.

Die EP 0 737 030 A schlägt einen Mähdrescher vor, bei dem die Spreu durch einen Fördergurt zunächst nach außen, dann nach hinten und wiederum zur Mitte gefördert wird, wo sie auf dem Strohschwad abgelegt wird.

Die DE 33 25 951 A offenbart einen gattungsgemäßen Mähdrescher, bei dem das Stroh durch eine Axialdrusch- und Trenneinheit zu den beiden Seiten des Mähdreschers transportiert wird und dort in zwei beidseits des Siebkastens angeordneten Schächten nach unten fällt. Dort wird es durch zwei Förderer nach innen ausgeworfen. Somit entsteht hinter dem Mähdrescher ein einziges Schwad.

In der US 4 078 366 A ist ein Schwader beschrieben, dem ein Seitenablagerechen nachläuft. Der Rechen ist derart verstellbar mit dem Schwader verbunden, dass er das durch den Schwader von einem Feld aufgenommene Material nach links oder rechts abgibt. Somit kann das Material in einem ersten Durchgang in einem Schwad abgelegt werden. Bei einem zweiten Durchgang in umgekehrter Fahrtrichtung wird das Material, das seitlich neben dem bereits im Schwad abgelegten Material aufgenommen wurde, auf demselben Schwad abgelegt. Auf diese Weise wird die Anzahl der Durchläufe, die eine Ballenpresse beim Aufnehmen des Schwads auf dem Feld zurücklegen muss, halbiert.

Als nachteilig ist bei den bekannten Mähdreschern mit Schwadablage anzusehen, dass mit der Ballenpresse auch dann, wenn nur wenig Stroh anfällt, ein ebenso langer Weg zurückzulegen ist wie mit dem Mähdrescher. Dazu ist ein hoher Zeit- und Energieaufwand erforderlich.

Die der Erfindung zugrunde liegende Aufgabe wird darin gesehen, einen Mähdrescher dahingehend weiterzuentwickeln, dass die zum kompletten Abernten eines Felds einschließlich des Herstellens von Ballen erforderliche Zeit vermindert ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf einen an sich bekannten Mähdrescher. Die Grundidee besteht darin, von der Dresch- und Trenneinrichtung abgegebene Erntegutreste, in der Regel Stroh, mit einer Transporteinrichtung in seitlicher Richtung von der Mittellängsachse des Mähdreschers hinweg zu fördern und in einem Abstand von ihr in einem Schwad auf dem Feld abzulegen. Auch die Spreu kann auf dem Schwad abgelegt werden.

Auf diese Weise wird es möglich, die Erntegutreste, welche bei zwei auf dem Feld zurückgelegten Wegstrecken anfallen, auf demselben Schwad abzulegen, um einen einzigen Schwad zu bilden.

Es können auch zwei mehr oder weniger nah nebeneinander liegende Schwade gebildet werden. Dabei kann die Fahrtrichtung gleich bleiben und die Transporteinrichtung die Erntegutreste bei der ersten und zweiten Wegstrecke in die jeweils entgegengesetzte Richtung fördern, oder die Fahrtrichtung sich unterscheiden und die Transporteinrichtung in dieselbe Richtung fördern.

Eine Ballenpresse muss somit nur die halbe Wegstrecke zurücklegen wie der Mähdrescher. Diese Art der Schwadablage ist insbesondere dann sinnvoll, wenn die Bestandsdichte des Ernteguts relativ gering ist, so dass sich eine Ballenpresse konventioneller Betriebsweise nur langsam füllt, oder wenn eine Ballenpresse mit relativ hoher Kapazität Verwendung findet.

Es ist denkbar, die Erntgutreste in einem Abstand von der Mittellängsachse des Mähdreschers abzulegen, die etwa der Hälfte des vom Mähdrescher aufgenommenen Schwads entspricht. Bei zwei nebeneinander verlaufenden Überfahrten des Felds wird somit ein großes Schwad in der Mitte dazwischen abgelegt. Möglich ist auch, die Transporteinrichtung bei der ersten Überfahrt außer Betrieb zu setzen und nur bei der zweiten Überfahrt zu aktivieren. Dazu muss die Transporteinrichtung zwar länger sein als bei der zuvor beschriebenen Vorgehensweise, jedoch spart man sich bei einer Überfahrt die Antriebsenergie für die Transporteinrichtung.

Die Aufgabe der Transporteinrichtung besteht darin, die Erntegutreste quer zur Vorwärtsbewegungsrichtung des Mähdreschers zu fördern. Ihre Förderrichtung muss nicht genau senkrecht zur Fahrtrichtung verlaufen, sondern kann mit ihr einen von 90 Grad verschiedenen Winkel einschließen. Grundsätzlich wäre denkbar, die Transporteinrichtung an den Mähdrescher anzuhängen, beispielsweise als Fahrzeug mit Rädern und Transporteinrichtung, oder als Rechen. Vorzugsweise ist die Transporteinrichtung aber am Mähdrescher befestigt, um separate Elemente zu vermeiden, die einzeln mitzuführen und anzubringen sind.

Die Transporteinrichtung kann grundsätzlich beliebig gestaltet sein. Es kann sich bei ihr um ein einfaches Leitblech, ein Rohr oder eine schiefe Ebene handeln, auf dem oder der die Erntegutreste hinuntergleiten. Bevorzugt ist aber eine angetriebene Ausführungsform, die eine hohe Kapazität aufweist und bei der keine Stauungen zu befürchten sind. Es kommen beispielsweise Fördergurte, Schneckenförderer und Trommelförderer in Frage, wobei mehrere dieser Förderer (und/oder unterschiedliche Förderertypen) hintereinander angeordnet sein können.

Vorteilhafterweise kann die Position der Transporteinrichtung variierbar sein, vorzugsweise auch während der Fahrt. So wird es möglich, sie in eine erste Position zu verbringen, in der die Erntegutreste bezüglich der Vorwärtsfahrtrichtung des Mähdreschers auf einer ersten Seite abgelegt werden. Bei einer anderen Ausführungsform kann die Transporteinrichtung auch zusätzlich in eine zweite Position verbracht werden, in der die Erntegutreste bezüglich der Vorwärtsfahrtrichtung des Mähdreschers auf einer zweiten, von der ersten Seite verschiedenen Seite abgelegt werden. Die erste Seite kann links und die zweite Seite rechts sein. Wenn also zwei seitlich benachbarte, parallele Wegstrecken auf einem Feld zurückgelegt werden, kann der Schwad der Erntegutreste in der Mitte zwischen ihnen abgelegt werden. In einigen Fällen kann es auch sinnvoll sein, die Erntegutreste auf der Mittelachse des Mähdreschers abzulegen. Die Transporteinrichtung muss in der ersten bzw. zweiten Position nicht unbedingt einen Winkel von 90 Grad mit der Fahrtrichtung einschließen, sondern der Winkel kann kleiner und/oder variierbar sein, um die Transporteinrichtung entsprechend der Arbeitsbreite des jeweils verwendeten Schneidwerks in die gewünschte Position verbringen zu können.

Insbesondere zum Transport auf einer öffentlichen Straße (oder wenn das Schwad bei einer Überfahrt des Felds hinter dem Mähdrescher abgelegt wird, wobei eine entsprechend lange Transporteinrichtung die Erntegutreste bei der benachbarten Überfahrt auf demselben Schwad ablegt) kann die Transporteinrichtung in eine Außerbetriebsstellung verbracht werden, in der sie beispielsweise an der Rückseite des Mähdreschers nach oben geschwenkt ist. Beim Einsatz auf einem Feld wird sie in die Betriebsstellung nach unten geschwenkt. Das Schwenken kann mittels eines Hydraulikzylinders oder manuell, gegebenenfalls mit Unterstützung mechanischer Mittel, wie einer Seilwinde oder ähnlichem erfolgen.

In den Zeichnungen ist ein nachfolgend näher beschriebenes Ausführungsbeispiel der Erfindung dargestellt. Es zeigt:
- Fig. 1: einen Mähdrescher mit einer erfindungsgemäßen Transporteinrichtung in Außerbetriebsstellung;
- Fig. 2: den Mähdrescher der Figur 1 mit einer Transporteinrichtung, die sich in einer Position befindet, in der die Erntegutreste auf der Mittellängsachse des Mähdreschers abgelegt werden;
- Fig. 3: den Mähdrescher der Figur 1 mit einer Transporteinrichtung, die sich in einer Position befindet, bei der die Erntegutreste seitlich neben dem Mähdrescher abgelegt werden;
- Fig. 4: eine rückwärtige Ansicht des Mähdreschers der Figur 3;
- Fig. 5: eine Draufsicht auf einen erfindungsgemäßen Mähdrescher bei der Ernte; und
- Fig. 6: eine andere Draufsicht auf einen erfindungsgemäßen Mähdrescher bei der Ernte.

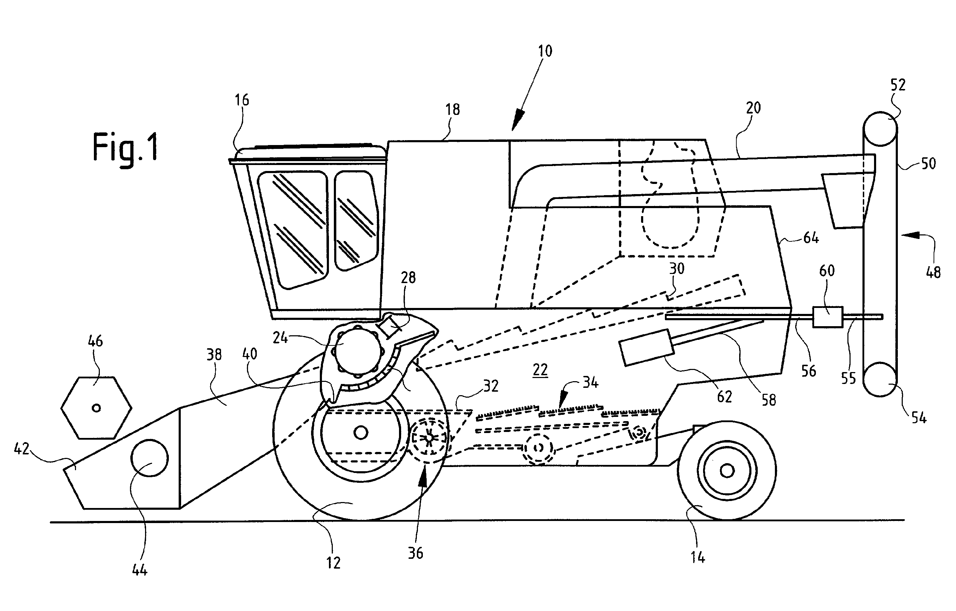

Ein in Figur 1 gezeigter Mähdrescher 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutreste (Stroh) über die Schüttler 30 an der Rückseite des Mähdreschers 10 ausgeworfen werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer Gutaufnahmeeinrichtung 42 in Form eines Schneidwerks vom Boden aufgenommen worden ist, die einen Schneckenförderer 44, der das abgeschnittene Gut dem Schrägförderer 38 zuführt, und eine in Drehung versetzbare Haspel 46 umfasst. Anstelle einer Dreschtrommel 24 und nachfolgenden Schüttlern 30 kann auch eine Axialdresch- und Trenneinheit Verwendung finden oder ein Hybridsystem mit einer Dreschtrommel und einer oder mehreren nachfolgenden axialen Trenneinheiten. Entscheidend ist, dass die Erntegutreste von Korn getrennt und ausgeworfen werden.

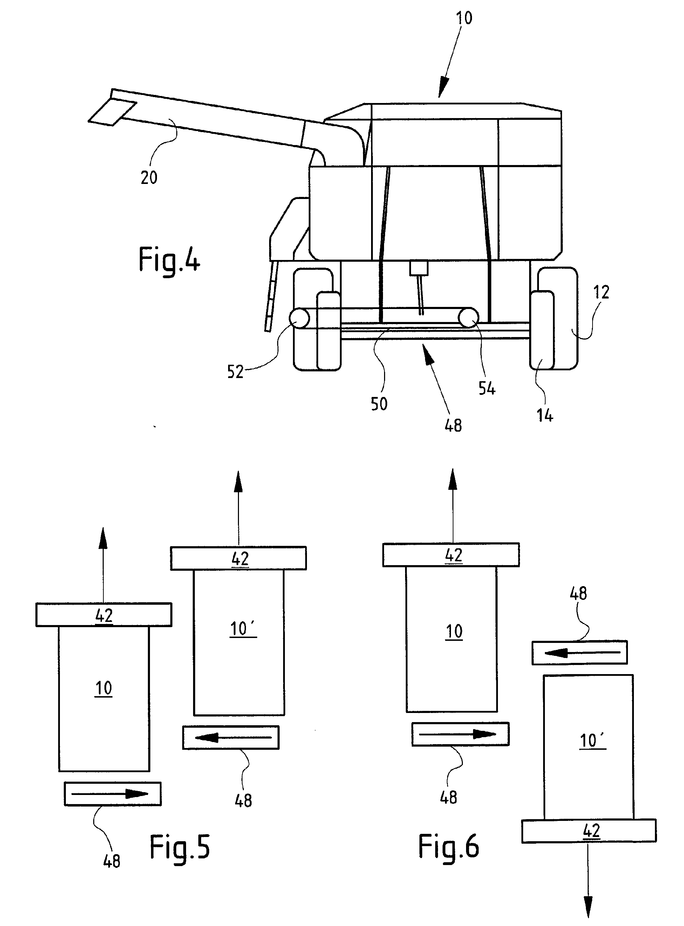

An der Rückseite des Mähdreschers 10 ist eine Transporteinrichtung 48 angeordnet, die sich in Figur 1 in der Außerbetriebsstellung befindet. Die Transporteinrichtung 48 umfasst einen endlosen Fördergurt 50, der zwei Walzen 52, 54 umläuft, von denen wenigstens eine mittels eines nicht eingezeichneten Motors in Drehung versetzbar ist. Die Transporteinrichtung 48 weist einen in Figur 4 erkennbaren Rahmen 57 auf, der die Walzen 52, 54 trägt und an dem eine stangenförmige Welle 55 befestigt ist. Die Welle 55 ist an dem vom Rahmen beabstandeten Ende mit einem Drehantrieb 60 verbunden, an dem wiederum eine Haltestange 56 befestigt ist. Die Haltestange 56 ist über einen Schwenkarm 58 mit einem Schwenkantrieb 62 verbunden. Der Schwenkantrieb kann mit einem hydraulischen Zylinder ausgestattet sein, während der Drehantrieb 60 einen Hydraulikmotor oder einen Elektromotor oder eine Winde o. ä. aufweisen kann. In der in Figur 1 dargestellten Außerbetriebsstellung ist die Welle 55 und die Haltestange 56 etwa horizontal orientiert und die Walzen 52, 54 sind übereinander angeordnet. Die Erntegutreste fallen von den Schüttlern 30 an der Rückseite des Mähdreschers an der unten offenen Ausfallhaube 64 nach unten auf den Boden des Feldes.

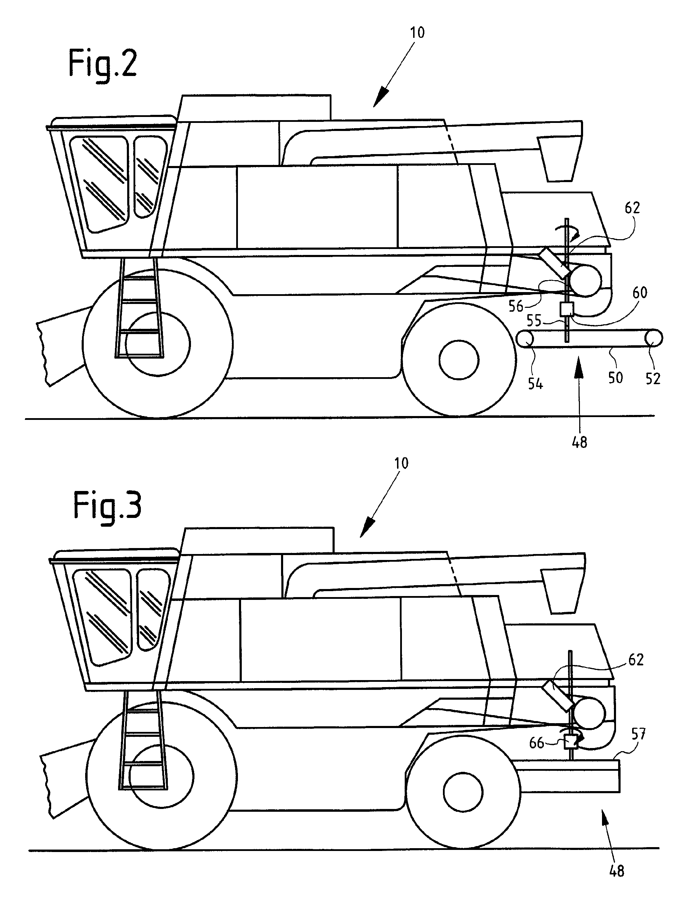

In Figur 2 ist die Transporteinrichtung 48 in einer nach unten verschwenkten Stellung dargestellt. Der Schwenkantrieb 62 hat die Haltestange 56 um eine horizontale, quer zur Fahrtrichtung verlaufende Drehachse nach vorn und unten geschwenkt. Der Fördergurt 50 erstreckt sich nunmehr in Fahrtrichtung des Mähdreschers 10 von vorn nach hinten. Die Erntegutreste fallen von den Schüttlern 30 auf den Fördergurt 50, der sie nach hinten fördert und auf dem Feld ablegt. Bei der in Figur 2 dargestellten Stellung werden sie auf der Längsmittelachse des Mähdreschers 10 abgelegt. Das Ablegen an dieser Stelle kann nützlich sein, wenn drei Schwaden zusammengeführt werden sollen, was durch einen ersten Erntevorgang mit der Transporteinrichtung 48 in der in Figur 2 eingezeichneten Stellung erfolgen kann, dem ein Erntevorgang auf der linken Seite und einer auf der rechten Seite des vom Feld geernteten Schwads folgen. Ein Ablegen der Erntegutreste in der in Figur 2 gezeigten Stellung der Transporteinrichtung kann auch dann sinnvoll sein, wenn die Bestandsdichte des Ernteguts zu groß ist, um einen der doppelten Arbeitsbreite der Gutaufnahmeeinrichtung 42 entsprechenden Schwad mit einer Ballenpresse aufnehmen zu können.

In den Figuren 3 und 4 befindet sich die Transporteinrichtung 48 in einer Betriebsposition, in der sich der Fördergurt 50 in seitlicher Richtung erstreckt. Gegenüber der in Figur 2 gezeigten Stellung wurde der die Walzen 52, 54 tragende Rahmen 57 mittels des Drehantriebs 60 durch eine Drehung der Welle 55 um 90 Grad um ihre Längsachse gedreht. Die Transporteinrichtung 48 transportiert die von den Schüttlern 30 herunterfallenden Erntegutreste quer zur Vorwärtsfahrtrichtung des Mähdreschers 10 und legt sie im Abstand von der Längsmittelachse des Mähdreschers 10 links neben dem Mähdrescher in einem Schwad auf dem Feld ab. Die Welle 55 kann mittels des Drehantriebs 60 auch in die entgegengesetzte Richtung gedreht werden, um die Erntegutreste rechts neben dem Mähdrescher 10 abzulegen.

In Figur 5 ist ein erster Mähdrescher 10 in Draufsicht bei einem Erntevorgang dargestellt, bei dem er eine erste Wegstrecke auf einem Feld zurücklegt. Der erste Mähdrescher 10 fährt in einer ersten Richtung, die sich in Figur 5 von unten nach oben erstreckt. Die Erntegutreste werden von der Transporteinrichtung 48 gegenüber der Fahrtrichtung nach rechts ausgeworfen und in einem ersten Schwad näherungsweise in einem Abstand von der Längsmittelachse des Mähdreschers 10 abgelegt, die der halben Arbeitsbreite der Gutaufnahmeeinrichtung entspricht.

Ein zweiter Mähdrescher 10' (oder der Mähdrescher 10 bei einer weiteren Überfahrt über das Feld) legt eine zweite Wegstrecke zurück, die seitlich neben der ersten Wegstrecke liegt und parallel zu ihr verläuft. Er weist eine Transporteinrichtung 10 auf, die Erntegutreste nach links auswirft (entsprechend der in Figur 3 und 4 dargestellten Position). Die Transporteinrichtung wurde somit durch Aktivieren des Drehantriebs 60 um 180 Grad um die Hochachse gedreht. Die Erntegutreste werden somit ebenfalls auf dem ersten Schwad abgelegt. Beim Aufnehmen des Schwads mit einer Ballenpresse ist somit nur noch die halbe Wegstrecke zurückzulegen, im Vergleich mit konventionellen Mähdreschern, bei denen die Erntegutreste auf einem Schwad abgelegt werden, der auf der Längsmittelachse des Mähdreschers liegt.

In Figur 6 ist eine (Figur 5 im wesentlichen entsprechende) Draufsicht auf zwei Mähdrescher bei einem Erntevorgang wiedergegeben, bei der die Fahrtrichtung der Mähdrescher (oder des Mähdreschers) beim Zurücklegen der zweiten Wegstrecke in entgegengesetzter Richtung verläuft, verglichen mit der Fahrtrichtung beim Zurücklegen der ersten Wegstrecke. Hier werden die Erntegutreste ebenfalls auf einem einzigen Schwad abgelegt. Ein Drehen der Transporteinrichtung um die Hochachse entfällt hier.

## Patentansprüche

1. Mähdrescher (10) mit einer Gutaufnahmeeinrichtung (42), einer Dresch- und Trenneinrichtung (24, 30), die ausgedroschene Erntegutreste ausgibt, und einer Transporteinrichtung (48), die eingerichtet ist, die von der Dresch- und Trenneinrichtung (24, 30) ausgegebenen, ausgedroschenen Erntegutreste in seitlicher Richtung zu transportieren und in einem Schwad auf einem Feld abzulegen, **dadurch gekennzeichnet, dass** die Transporteinrichtung (48) eingerichtet ist, die Erntegutreste im Abstand von der Mittellängsachse des Mähdreschers (10) auf dem Feld abzulegen.

2. Mähdrescher (10) nach Anspruch 1, **dadurch gekennzeichnet, dass** die Transporteinrichtung (48) antreibbar ist.

3. Mähdrescher (10) nach Anspruch 1 oder 2, **dadurch gekennzeichnet, dass** die Transporteinrichtung (48) eingerichtet ist, die Erntegutreste in einem Abstand von der Mittellängsachse des Mähdreschers (10) auf dem Feld abzulegen, der etwa der halben oder der ganzen Arbeitsbreite der Gutaufnahmeeinrichtung (42) entspricht.

4. Mähdrescher (10) nach einem der Ansprüche 1 bis 3, **dadurch gekennzeichnet, dass** die Transporteinrichtung (48) einen Gurtförderer und/oder einen Schneckenförderer und/oder einen Trommelförderer umfasst.

5. Mähdrescher nach einem der Ansprüche 1 bis 4, **dadurch gekennzeichnet, dass** die Position der Transporteinrichtung (48) veränderbar ist, vorzugsweise während der Fahrt.

6. Mähdrescher (10) nach einem der Ansprüche 1 bis 5, **dadurch gekennzeichnet, dass** die Transporteinrichtung (48) in eine erste Position, in der sie die Erntegutreste auf einer ersten Seite des Mähdreschers (10) ablegt und/oder eine zweite Position, in der sie die Erntegutreste auf einer zweiten, von der ersten Seite verschiedenen Seite des Mähdreschers (10) ablegt, bewegbar ist.

7. Mähdrescher (10) nach einem der Ansprüche 1 bis 6, **dadurch gekennzeichnet, dass** die Transporteinrichtung (48) in eine Position verbringbar ist, in der die Erntegutreste auf der Mittellängsachse des Mähdreschers (10) abgelegt werden.

8. Mähdrescher (10) nach einem der Ansprüche 1 bis 7, **dadurch gekennzeichnet, dass** die Transporteinrichtung (48) zwischen einer Betriebsstellung, in der sie die Erntegutreste auf dem Feld ablegt, und einer Außerbetriebsstellung bewegbar ist.

9. Mähdrescher (10) nach Anspruch 8, **dadurch gekennzeichnet, dass** die Transporteinrichtung (48) in der Außerbetriebsstellung nach oben verschwenkt ist.

10. Verfahren zum Abernten eines Feldes, mit folgenden Schritten:
Abfahren einer ersten Wegstrecke auf dem Feld mit einem ersten Mähdrescher (10), wobei Erntegut aufgenommen und ausgedroschen wird und Erntegutreste in einem ersten Schwad auf dem Feld abgelegt werden;
Abfahren einer zweiten Wegstrecke auf dem Feld mit dem ersten oder einem anderen Mähdrescher (10'), wobei Erntegut aufgenommen und ausgedroschen wird und Erntegutreste in einem Schwad abgelegt werden; und
Aufnehmen des Schwads mittels einer Ballenpresse,
**dadurch gekennzeichnet, dass** die Erntegutreste beim Abfahren der zweiten Wegstrecke auf bzw. unmittelbar neben dem ersten Schwad abgelegt werden.

11. Verfahren nach Anspruch 10, **dadurch gekennzeichnet, dass** der Mähdrescher (10) auf der zweiten Wegstrecke dieselbe oder eine entgegengesetzte Fahrtrichtung wie bei der ersten Wegstrecke hat.
